# EUROPÄISCHE PATENTANMELDUNG

(11) **EP 0 614 951 A2**
(43) Veröffentlichungstag der Anmeldung: **14.09.1994**
(21) Anmeldenummer: 94103375.5
(22) Anmeldetag: 05.03.1994
(51) Int. Cl.: C09D 7/14, C09D 5/02, C09D 175/04

(54) **Verfahren zur Herstellung von wässrigen unifarbenen Überzugsmitteln, unter Verwendung von Modulsystemen**

(30) Priorität: 10.03.1993 DE 4307498
(71) Anmelder: Herberts Gesellschaft mit beschränkter Haftung, D-42285 Wuppertal (DE)
(72) Erfinder: Brock, Thomas, Dr., D-50354 Hürth (DE); Döbert, Jürgen, D-45549 Sprockhövel (DE)
(74) Vertreter: Türk, Gille, Hrabal, Leifert

(57) **Zusammenfassung**

Beschrieben wird ein Verfahren zur Herstellung von wäßrigen Überzugsmitteln mit abstimmbarem Farbton und niedrigem Lösemittelgehalt. Die Überzugsmittel sind insbesondere zur Lackierung von Kraftfahrzeugen und Kraftfahrzeugteilen geeignet. Das Verfahren erfolgt dadurch, daß man getrennt voneinander jeweils einen Vorrat an
- mindestens einem stabilen Farbmodul A), enthaltend
   ein oder mehrere Farbpigmente und/oder Füllstoffe, ein oder mehrere anionisch stabilisierte wasserverdünnbare Pastenharze auf Polyurethanbasis, mindestens 20 Gew.-% Wasser, sowie gegebenenfalls ein oder mehrere wasserverdünnbare anionisch und/oder nicht-ionisch stabilisierte Bindemittel, ein oder mehrere organische Lösemittel und/oder lackübliche Additive, und
- mindestens ein stabiles Bindemittelmodul B), enthaltend
   ein oder mehrere wasserverdünnbare anionisch und/oder nicht-ionisch stabilisierte Bindemittel, Wasser, gegebenenfalls ein oder mehrere Lösemittel, sowie gegebenenfalls einen oder mehrere Vernetzer und/oder ein oder mehrere lackübliche Additive, bereitstellt und gegebenenfalls einlagert und bei Bedarf die jeweils zur Erzielung eines gewünschten Farbtons erforderlichen Mengen der bereitgestellten Module A) und B) miteinander vermischt.

## Beschreibung

Die Erfindung betrifft die Verwendung eines Modulsystems (Baukastensystems, Mischsystems), in einem Verfahren zur Herstellung von wäßrigen unifarbenen Überzugsmitteln mit abstimmbarem Farbton. Das Verfahren ist insbesondere zur Herstellung wäßriger Uni-Basislacke geeignet, die besonders in der Fahrzeug- und Fahrzeugteilelackierung Anwendung finden können.
In der Fahrzeug- und Fahrzeugteilelackierung setzt sich der Einsatz wasserverdünnbarer Lacksysteme immer mehr durch. Im Bereich der wäßrigen Uni-Basislacke besteht die Forderung nach einer ständig wachsenden Anzahl von Farbtönen, was eine rationelle Fertigung und Lagerung zunehmend erschwert. Ein Weg zur Lösung dieses Problems besteht in der Bereitstellung einer begrenzten Anzahl lagerfähiger Einzelbausteine, die je nach gewünschtem Farbton kurz vor der Applikation zum fertigen, wäßrigen Uni-Basislack kombiniert werden.

So beschreibt die EP-A-0 468 293 ein Nichtmetallic-Wasserbasislack-Baukastensystem aus zwei Bausteinen, die nach Kombination einen fertigen Nichtmetallic-Wasserbasislack ergeben. Dabei ist es wesentlich, daß der pigmentierte Baustein ein Anreibeharz und ein Bindemittel jeweils in Form wäßriger Latices auf Acrylatbasis enthält.

Weiterhin beschreiben die EP-A-0 399 427 und die EP-A-0 471 972 Metallic-Wasserbasislack-Baukastensysteme. In den Anmeldungen wird die Möglichkeit erwähnt, das Baukastensystem auch zur Formulierung von Nichtmetallic-Wasserbasislacken einzusetzen. Der pigmentierte Baustein enthält ein Anreibeharz und ein Bindemittel jeweils in Form wäßriger Latices auf Acrylatbasis.
Diese Baukastensysteme sind unflexibel hinsichtlich der Auswahl der Bindemittelkomponente in den daraus gefertigten Wasserbasislacken. Eine gezielte Anpassung an unterschiedliche technologische Anforderungen durch freie Variation in der Bindemittelauswahl der Wasserbasislacke ist nicht möglich.
Die DE-A-41 10 520 beschreibt ein Mischsystem, das geeignet sein soll, wäßrige pigmentierte Beschichtungsmittel mit genau festgelegter Tönung herzustellen. Insbesondere sollen damit Wasserbasislacke hergestellt werden. Das Mischsystem besteht aus verschiedenen Basisfarben (A), die weniger als 5 Gew.-% Wasser enthalten, bevorzugt wasserfrei sind und Pigmente, Lösemittel sowie wasserverdünnbare Bindemittel enthalten, und einer pigmentfreien wäßrigen Komponente (B), die insbesondere wasserverdünnbare Bindemittel und/oder Rheologieadditive enthält. Die in Komponente A enthaltenen wasserverdünnbaren Bindemittel liegen in Lösungsmittelform vor und müssen in Lösungsmittelform darstellbar sein. Die so formulierten Wasserbasislacke weisen deshalb einen unerwünscht hohen Lösemittelanteil auf. Die fertigen Überzugsmittel werden durch Mischen der Komponenten direkt vor der Applikation hergestellt, sie sind nicht lagerstabil.
Aufgabe der Erfindung ist die Bereitstellung eines Verfahrens unter Verwendung eines Modulsystems (Baukastensystems), das zur Herstellung von wäßrigen unifarbenen Überzugsmitteln, insbesondere zur Herstellung wäßriger einkomponentiger Uni-Basislacke geeignet ist, das flexibel in der Auswahl der Bindemittel ist und zu Uni-Basislacken führt, die über lange Zeit lagerstabil sind und einen geringen Lösemittelgehalt aufweisen.
Es hat sich gezeigt, daß diese Aufgabe gelöst werden kann durch Verwendung eines Modulsystems, das ein Farbmodul mit einem hohen Wassergehalt enthält, und bei dem die einzelnen Module des Systems einfach miteinander vermischbar sind um je nach Menge einen gewünschten Farbton zu ergeben.
Ein Gegenstand der Erfindung ist somit ein Verfahren zur Herstellung von wäßrigen, unifarbenen Überzugsmitteln mit abstimmbarem Farbton durch Vermischen von mindestens einer wäßrigen, Farbpigmente und/oder Füllstoffe und Pastenharze auf Polyurethanbasis enthaltenden Komponente A), mit mindestens einer wäßrigen Bindemittelkomponente B), das dadurch gekennzeichnet ist, daß man getrennt voneinander jeweils einen Vorrat an
- mindestens einem stabilen Farbmodul A), enthaltend
   ein oder mehrere Farbpigmente und/oder Füllstoffe, ein oder mehrere anionisch stabilisierte wasserverdünnbare Pastenharze auf Polyurethanbasis, mindestens 20 Gew.-% Wasser, sowie gegebenenfalls ein oder mehrere wasserverdünnbare anionisch und/oder nichtionisch stabilisierte Bindemittel, ein oder mehrere organische Lösemittel und/oder lackübliche Additive, und
- mindestens einem stabilen Bindemittelmodul B), enthaltend
   ein oder mehrere wasserverdünnbare anionisch und/oder nicht-ionisch stabilisierte Bindemittel, Wasser, gegebenenfalls ein oder mehrere organische Lösemittel, sowie gegebenenfalls einen oder mehrere Vernetzer und/oder ein oder mehrere lackübliche Additive,
- sowie gegebenenfalls zusätzlich:
   mindestens einem stabilen Rheologiemodul C), enthaltend
   ein oder mehrere organische oder anorganische die Rheologie steuernde Mittel (Rheologiekomponenten) und Wasser, sowie gegebenenfalls ein oder mehrere wasserverdünnbare anionisch und/oder nicht-ionisch stabilisierte Bindemittel und/oder ein oder mehrere organische Lösemittel, und/oder
   mindestens einem stabilen Vernetzermodul D), enthaltend
   ein oder mehrere Vernetzungsmittel, sowie gegebenenfalls ein oder mehrere organische Lösemittel, Wasser, ein oder mehrere anionisch und/oder nicht-ionisch stabilisierte wasserverdünnbare Bindemittel und/oder ein oder mehrere lackübliche Additive
bereitstellt und gegebenenfalls einlagert, und bei Bedarf die jeweils zur Erzielung eines gewünschten Farbtons erforderlichen Mengen der bereitgestellten Module A) und B), sowie gegebenenfalls C) und/oder D) miteinander vermischt.
Da durch das erfindungsgemäße Verfahren unifarbene Überzugsmittel erstellt werden sollen, sind alle Module frei von Effektpigmenten, wie Metallic- und Interferenzpigmente.

Unter Modul werden hier lagerstabile, getrennt lagerbare Bausteine (Mischbausteine) verstanden, aus denen durch Mischen ein fertiges Überzugsmittel hergestellt werden kann, das gegebenenfalls noch auf Applikationsviskosität eingestellt werden kann. Durch das Vermischen der einzelnen Module können gewünschte abstimmbare Farbtönungen erhalten werden. Die Module können dem Anwender beispielsweise in Form eines zumindest die Module A) und B) enthaltenden Baukastens bereitgestellt werden.

Von jedem der Module A) bis D) können verschiedene Ausführungsformen bereitgestellt werden. Auf diese Weise entstehen Modulreihen, die aus einem oder mehreren Modulen bestehen können.

Das Farbmodul A) ist eine wäßrige Zubereitung, die ein oder mehrere Farbpigmente und/oder Füllstoffe, ein oder mehrere anionisch stabilisierte wasserverdünnbare Pastenharze auf Polyurethanbasis, mindestens 20 Gew.-% Wasser, sowie gegebenenfalls ein oder mehrere wasserverdünnbare anionisch und/ oder nichtionisch stabilisierte Bindemittel, ein oder mehrere organische Lösemittel und/oder lackübliche Additive enthält.

Bevorzugt enthält jedes Farbmodul A) nicht mehr als 4 verschiedene Farbpigmente und/oder Füllstoffe, besonders bevorzugt handelt es sich um nur ein Farbpigment oder nur einen Füllstoff enthaltende wäßrige Farbmodule. In den Farbmodulen der erfindungsgemäßen Systeme können übliche anorganische und/oder organische Farbpigmente und/oder Füllstoffe enthalten sein. Beispiele für anorganische oder organische Farbpigmente oder Füllstoffe sind Titandioxid, mikronisiertes Titandioxid, Eisenoxidpigmente, Ruß, Siliciumdioxid, Bariumsulfat, mikronisierter Glimmer, Talkum, Azopigmente, Phthalocyaninpigmente, Chinacridon- oder Pyrrolopyrrolpigmente. Die Farbmodule enthalten keine Effektpigmente, wie Metallicpigmente und Interferenzpigmente.

Bevorzugte im Farbmodul A) enthaltene wasserverdünnbare anionisch stabilisierte Polyurethan-Pastenharze sind beschrieben in DE-A-40 00 889. Es handelt sich um Polyesterurethanharze mit einer Säurezahl von 10 bis 50, erhältlich durch Umsetzung von
- einem oder mehreren, von olefinischen Doppelbindungen freien Polyesterpolyolen mit einer OH-Zahl von 35 bis 200 und einer Molmasse von 500 bis 5000, die mit 2 bis 30 Gew.-%, bezogen auf das Polyesterpolyol, an einem oder mehreren niedermolekularen Diolen mit einer Molmasse von 60 bis 350, von denen ein Teil mindestens eine zur Anionenbildung befähigte Säuregruppe enthält, vermischt sind, mit
- einem oder mehreren Diisocyanaten, im Verhältnis der OH-Gruppen von Polyesterpolyol und Diol zu den NCO-Gruppen des Diisocyanats von über 1,0 bis 1,2, wobei die Molmasse des Diisocyanats so gewählt wird, daß das erhaltene Polyesterurethan ein Zahlenmittel der Molmasse (Mn) von 3000 bis 200000 aufweist.

Beispiele für die verwendbaren niedermolekularen Diole mit zur Anionenbildung befähigten Säuregruppen sind Dihydroxycarbonsäuren, insbesondere Bis(hydroxymethyl)monocarbonsäuren, wie z.B. Dimethylolpropionsäure. Sie werden in derartigen Anteilen eingesetzt, daß sich die gewünschte Säurezahl des fertigen Polyesterurethanharzes ergibt.

Als typische Diisocyanate zur Umsetzung mit dem Polyol-/Diol-Gemisch werden beispielsweise lineare oder verzweigte aliphatische, cycloaliphatische und/oder aromatische Kohlenwasserstoffe mit einem Isocyanatgehalt von 20 bis 50 Gew.-% (berechnet als NCO) verwendet. Sie enthalten als funktionelle Gruppen zwei Isocyanatgruppen, die im Molekül asymmetrisch oder symmetrisch angeordnet sind. Sie können aliphatisch, alicyclisch, arylaliphatisch oder aromatisch sein. Beispiele sind 1,4-Bis(isocyanat)benzol, 2,4-Bis-(isocyanat)toluol, Bis-(isocyanat)isododecylbenzol, Bis-(2-isocyanat-phenyl)methan, 1,5-Bis-(isocyanat)naphthalin, 4,4'-Bis-(isocyanat)-3,3'-dimethylbiphenyl. Beispiele für verwendbare aliphatische Diisocyanate sind solche der allgemeinen Formel 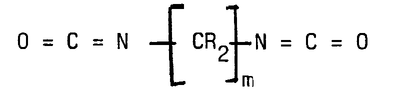
worin m eine ganze Zahl von 2 bis 20, insbesondere 5 bis 8 ist und R, das gleich oder verschieden sein kann, Wasserstoff oder einen niedrigen Alkylrest mit 1 bis 8 C-Atomen, vorzugsweise eine Methylgruppe darstellt.

Beispiele hierfür sind 1,6-Bis-(isocyanat)pentan, 1,6-Bis-(isocyant)-hexan, 1,6-Bis-(isocyanat)-2,2,4-trimethylhexan, 1,4-Bis-(2-isocyanatethyl)cyclohexan oder 1,3-Bis-(2-isocyanatmethyl)cyclohexan. Beispiele für geeignete cycloaliphatische Diisocyanate sind 1,4-Bis-(isocyanat)-cyclohexan, Bis-(4-isocyanat-cyclohexyl)methan, 5-Isocyanat-3-(isocyanatmethyl)-1,1,3-trinethylcyclohexan oder Menthandiisocyanat. Als arylaliphatische Diisocyanate können verwendet werden beispielsweise 1,3-Bis- (1-isocyanatmethyl)benzol, 1,4-Bis-(1-isocyanat-1-methylethyl)-benzol oder Tetramethylxylylendiisocyanat. Besonders bevorzugt sind 5-Isocyanat-3-(isocyanatmethyl)-1,1,3-trimethylcyclohexan (=Isophorondiisocyanat) und/oder Bis-(4-isocyanat-cyclohexyl)methan (=Desmodur W^{R}) als Gemisch verschiedener sterischer Konfiguration.

Diese Pastenharze liegen bevorzugt vor als zu 70 - 100 % mit Ammoniak und/oder Amin neutralisierte wäßrige Bindemittelzusammensetzungen mit einem Gehalt von 20 bis 50 Gew.-% des Pastenharzes, 4 - 25 Gew.-% eines oder mehrerer zumindest teilweise mit Wasser mischbarer organischer Lösemittel und 15 - 75 Gew.-% Wasser.

Das erfindungsgemäß einsetzbare Farbmodul (A) kann zusätzlich zum Polyurethanpastenharz anionisch und/oder nichtionisch stabilisierte wasserverdünnbare Bindemittel enthalten. Dabei können beispielsweise die gleichen Harze eingesetzt werden, wie bei dem Bindemittelmodul (B) nachfolgend beschrieben. Es handelt sich bevorzugt um anionische Ladungen tragende Bindemittel, die als Bindemittelkomponente der fertigen wäßrigen Uni-Basislacke dienen. Die anionischen Gruppen liegen bevorzugt als neutralisierte Carboxylgruppen vor, entsprechend einer Säurezahl von bevorzugt 15 - 70 mg KOH/g. Die Harze können beispielsweise Polyester-, Acrylat- oder Polyurethanbasis haben, bevorzugt enthält jedes wäßrige Farbmodul (A) neben dem Polyurethanpastenharz das gleiche Bindemittel oder Bindemittelgemisch. Die Bindemittelkomponente kann physikalisch trocknend, selbstvernetzend oder fremdvernetzend sein. Insbesondere im letzteren Falle können im Farbmodul ein oder mehrere wasserverdünnbare oder nicht wasserverdünnbare Vernetzer für die Bindemittelkomponente enthalten sein. Es können beispielsweise solche Vernetzer verwendet werden, wie sie nachfolgend für das Vernetzermodul beschrieben werden.

Weiterhin kann das Farbmodul (A) geringe Anteile mindestens eines wassermischbaren Lösemittels enthalten, wie Alkohole, z.B. Monoalkohole, wie Butanol, n-Propanol, Isopropanol; Etheralkohole, z.B. Butoxyethanol, Butoxypropanol, Methoxypropanol; Dialkohole, wie Glykole, z.B. Ethylenglykol, Polyethylenglykol; Trialkohole wie Glycerin; Ketone, z.B. Aceton, Methylethylketon; N-Methylpyrrolidon; Ether, z.B. Dipropylenglykoldimethylether.

Ebenso können Basen als Neutralisationsmittel enthalten sein. Beispiele sind Ammoniak oder organische Amine wie Triethylamin, N-Methylmorpholin, Aminoalkohole, wie Dimethylisopropanolamin, Dimethylethanolamin, 2-Amino-2-Methylpropanol-1.

Es kann günstig sein, wenn das Farbmodul (A) ein oder mehrere rheologiesteuernde Mittel enthält. Dabei kann es sich beispielsweise um Substanzen oder Gemische handeln, wie sie bei der Herstellung des Rheologiemoduls (c) beschrieben werden. Diese können direkt bei der Herstellung des Farbmoduls zugesetzt werden oder als fertiges Rheologiemodul nachträglich zugemischt werden.

Weiterhin können im wäßrigen Farbmodul (A) lackübliche Additive, wie z.B. Netzmittel, Entschäumer, Verlaufsmittel, Dispergierhilfsmittel enthalten sein.

Die Herstellung des wäßrigen Farbmoduls (A) erfolgt im allgemeinen so, daß das Farbpigment und/oder der Füllstoff im wäßrigen Polyurethanpastenharz angerieben wird. Dies kann in üblichen, dem Fachmann bekannten Aggregaten geschehen. Danach wird gegebenenfalls mit einem weiteren Anteil an Polyurethanpastenharz und/oder den gegebenenfalls im Farbmodul (A) enthaltenen anionisch und/oder nicht-ionisch stabilisierten wasserverdünnbaren Bindemitteln und/oder weiteren Zusätzen komplettiert.

Es entstehen wäßrige lagerstabile Farbmodule (A) mit einem Pigment- bzw. Füllstoff/Bindemittelverhältnis von beispielsweise 0,01 : 1 bis 10 : 1, bezogen auf das Festkörpergewicht. Der Festkörpergehalt liegt bevorzugt bei 20 - 80 Gew.-%.

Der pH-Wert der erfindungsgemäß einsetzbaren Farbmodule liegt bevorzugt bei 7,0 bis 10,0. Das Gewichtsverhältnis von organischem Lösemittel zu Wasser im wäßrigen Farbmodul beträgt bevorzugt bis 0,3 : 1, besonders bevorzugt bis zu 0,2 : 1. Der Wassergehalt im Farbmodul beträgt mindestens 20, bevorzugt 20 - 75 Gew.-%.

Das Bindemittelmodul B) ist eine wäßrige Lösung oder Dispersion mindestens eines anionisch und/oder nicht-ionisch stabilisierten wasserverdünnbaren Bindemittels. Es handelt sich dabei um ein oder mehrere filmbildende Harze wie sie in wäßrigen Überzugsmitteln, insbesondere in wäßrigen Basislacken, üblich sind. Sie können allein oder auch in Kombination mit dem Polyurethanpastenharz aus dem Farbmodul (A) vorliegen. Die filmbildenden Harze können beispielsweise Polyester-, Polyacrylat- oder bevorzugt Polyurethanbasis haben. Sie können selbst- oder fremdvernetzend oder physikalisch trocknend sein.

Beispiele für geeignete nichtionisch stabilisierte Bindemittel sind solche Bindemittel, deren Wasserverdünnbarkeit durch Einbau von Polyethersegmenten in das Harzmolekül erreicht wird. Beispiele für derartig stabilisierte Harze sind Polyurethan- bzw. Polyurethanacrylatharze, wie sie z .B. in den EP-A-0 354 261, EP-A-0 422 357 und EP-A-0 424 705 beschrieben werden.

Bevorzugt enthält das wäßrige Bindemittelmodul anionisch stabilisierte Bindemittel. Beispiele dafür sind (Meth)acrylcopolymere, Polyesterharze oder bevorzugt Polyurethanharze.

Beispiele für geeignete wasserverdünnbare (Meth)acrylcopolymere sind in EP-A-0 399 427 und EP-A-0 287 144 beschrieben.

Beispiele für geeignete wasserverdünnbare Polyesterharze sind in DE-A-29 26 584, DE-A-38 32 142 und EP-A-0 301 300 beschrieben.

Es ist auch möglich Gemische von Bindemitteln einzusetzen. Besonders geeignete Bindemittel sind solche, in denen (Meth)acrylcopolymer und Polykondensationsharz kovalent oder in Form interpenetrierender Harzmoleküle verbunden vorliegen. Beispiele für eine verwendbare derartige Kombination von (Meth)acrylcopolymer und Polyesterharz sind in der EP-A-0 226 171 beschrieben.

Beispiele für die besonders bevorzugten anionisch stabilisierten Polyurethanharze sind in der Literatur in großer Vielfalt beschrieben. Es handelt sich dabei um wäßrige Polyurethandispersionen oder -lösungen oder um solche Bindemittel, in denen (Meth)acrylcopolymer und Polyurethanharze kovalent oder in Form interpenetrierender Harzmoleküle verbunden vorliegen. Geeignete Polyurethan-Dispersionen sind stabile, wäßrige Dispersionen mit einem Festkörper von 20 bis 50 Gew.-%. Das Gewichtsmittel der Molmasse (M_{w}) der Harze kann in weiten Grenzen schwanken, z.B. von 1000 bis 500000, wobei bevorzugt filmbildende Bindemittel im oberen Zahlenbereich und Pastenharze bevorzugt im unteren Zahlenbereich der Molmasse liegen.

Weitere Beispiele für verwendbare Polyurethandispersionen sind solche, die durch Kettenverlängerung isocyanatfunktioneller Prepolymerer mit Polyamin und/oder Polyol hergestellt werden können. Sie werden beispielsweise in den EP-A-0 89 497, EP-A-0 228 003, DE-A-36 28 124 und EP-A-0 512 524 beschrieben.

Weitere Beispiele sind Polyurethandispersionen, die durch Kettenverlängerung isocyanatfunktioneller Prepolymerer mit Wasser hergestellt werden können, wie z.B. in der DE-A-39 15 459 dargestellt.

Besonders bevorzugte Polyurethandispersionen dieses Typs sind in der DE-A-42 24 617 beschrieben. Dabei handelt es sich um selbstemulgierende Polyurethandispersionen, die bevorzugt, bezogen auf ihren Festkörper, im nicht neutralisierten Zustand eine Säurezahl von 5 bis 50, besonders bevorzugt über 10 und unter 30 haben. Das selbstemulgierbare Urethanharz hat bevorzugt eine Glasübergangstemperatur, die unter der Dispergiertemperatur liegt. Die Dispersion kann z.B. so hergestellt werden, daß ein Urethanprepolymer hergestellt wird, indem man ein oder mehrere Polyisocyanate (a), bevorzugt Diisocyanate, mit einem Polyether- oder Polyesterdiol (b1) oder einer Mischung derselben, sowie gegebenenfalls eine oder mehrere niedermolekulare Polyhydroxylverbindungen (b2) und eine oder mehrere Dimethylolalkancarbonsäuren (c) in einem NCO/OH-Äquivalentverhältnis von 1,1 - 2,0 : 1, bevorzugt 1,1 - 1,9 : 1, in einer Ein- oder Mehrstufenreaktion in einem hydrophilen organischen, von aktivem Wasserstoff freien Lösungsmittel umsetzt. Anschließend erfolgt beispielsweise in der organischen Phase eine Kettenverlängerung mit Wasser, wobei pro NCO-Gruppe beispielsweise 0,5 bis 3 Mole Wasser eingesetzt werden. Das so erhaltene Polymere kann nach oder während seiner Neutralisation mit einem Amin in weiterem Wasser emulgiert und das organische Lösemittel, falls erforderlich, abdestilliert werden.

Es können auch Polyurethandispersionen verwendet werden, die durch Kettenverlängerung von gegenüber Polyisocyanaten reaktiven, aktiven Wasserstoff enthaltenden Polyurethan-Prepolymeren mit Polyisocyanaten hergestellt werden. Beispiele sind in DE-A-39 03 804 und DE-A-40 01 841 enthalten.

Weitere Beispiele für verwendbare anionisch stabilisierte Polyurethan (PU)-Dispersionen sind in der noch nicht veröffentlichten deutschen Patentanmeldung P 42 28 510 der gleichen Anmelderin beschrieben. Dabei handelt es sich um wäßrige Polyurethanharzdispersionen, die erhältlich sind durch Kettenverlängerung von
- einem oder mehreren Polyurethanharzen, die mindestens eine CH-acide Gruppe im Molekül enthalten, durch Umsetzung in wäßrigem oder nichtwäßrigem Medium, mit
- mindestens einer Verbindung, die mit mindestens zwei CH-aciden Gruppen reagieren kann und
- gegebenenfalls Überführen eines im nicht-wäßrigen Medium erhaltenen Reaktionsproduktes in die wäßrige Phase.

Bevorzugt werden diese Dispersionen lösemittelfrei hergestellt. Bevorzugt enthalten die Bindemittel noch reaktive funktionelle Gruppen.

Das Polyurethanharz, das mindestens eine CH-acide Gruppe enthält, kann dabei auf verschiedene Weise hergestellt werden. Derartige CH-acide PU-Harze sind beispielsweise in der EP-A-0 367 051 beschrieben.

Ein weiterer Weg zur Herstellung einer Dispersion derartiger Polyurethanharze verläuft durch Umsetzung von einem Hydroxylgruppen enthaltenden Polyurethanharz mit mindestens einer ionischen Gruppe, das Harnstoffgruppierungen enthalten kann, in wasserfreiem Milieu, mit mindestens einer Verbindung, die mindestens eine zur Reaktion mit zumindest einem Teil der OH-Gruppen des Polyurethanharzes geeignete funktionelle Gruppe aufweist und darüber hinaus eine CH-acide Gruppe enthält und Überführen des erhaltenen Produkts nach Neutralisation in die wäßrige Phase.

Die Dispersionen werden vor oder nach der Überführung in die Wasserphase kettenverlängert mit einer Verbindung, die mit zwei CH-aciden Funktionen reagieren kann. Bevorzugt wird die Kettenverlängerung jedoch in der wäßrigen Dispersion durchgeführt.

Zur Kettenverlängerung geeignet sind Verbindungen, die mit CH-aciden Zentren reagieren können. Dabei muß mindestens eine zweifache Reaktionsmöglichkeit gegeben sein. Beispiele für solche Verbindungen sind Aldehyde oder Di- oder Polyisocyanate. Die geeigneten Kettenverlängerungsreagentien können einzeln oder in Kombination eingesetzt werden.

Beispiele für anionisch stabilisierte Polyurethan-basierende Bindemittel, die als Bestandteil des wäßrigen Bindemittelmoduls geeignet sind, in denen (Meth)acrylcopolymer und Polyurethanharz kovalent oder in Form interpenetrierender Harzmoleküle verbunden vorliegen, sind z.B. in den EP-A-353 797, EP-A-297 576, DE-A-41 22 265 und DE-A-41 22 266 beschrieben. Es handelt sich um Polymerhybride, die durch Emulsionspolymerisation radikalisch polymerisierbarer Monomerer in Gegenwart von anionisch stabilisierten Polyurethanen, die gegebenenfalls auch ungesättigt funktionalisiert sind, hergestellt werden.

Bevorzugt sind dabei die in der DE-A-41 22 265 beschriebenen Polyurethanbasierenden Bindemittel dieses Typs.

Es handelt sich um Polyurethan-Dispersionen, hergestellt durch radikalisch initiierte Polymerisation von Polyurethan-Makromonomeren mit einem Gehalt an Carboxyl-, Phosphonsäure- oder Sulfonsäuregruppen und lateralen Vinylgruppen, sowie gegebenenfalls terminalen Vinylgruppen, Hydroxyl-, Urethan-, Thiourethan- und/oder Harnstoffgruppen.

Diese Polyurethan-Dispersionen können im Prinzip auf verschiedenen Wegen hergestellt werden. Ein Weg besteht z.B. darin, daß ein Polyadditionsprodukt hergestellt wird durch Polyaddition von Polyhydroxy-Verbindungen aus der Gruppe Polyhydroxy-polyether, Polyhydroxy-polyester oder Polyhydroxypolycarbonate, weiterhin Polyhydroxycarbonsäuren, Dihydroxyphosphonsäuren oder Polyhydroxysulfonsäuren, sowie Polyisocyanaten und einem mindestens zwei Hydroxy- sowie mindestens eine Vinylgruppe enthaltenden Monomeren. Die Mengenverhältnisse der Reaktanten, insbesondere an Polyisocyanat, werden dabei so gewählt, daß ein Makromonomer mit terminalen Hydroxylgruppen entsteht. Dieses Makromonomer, das außerdem Carboxyl-, Phosphonsäure- oder Sulfonsäuregruppen und laterale Vinylgruppen enthält, wird dann neutralisiert, falls die sauren Gruppen in den Monomeren, die solche Gruppen tragen, nicht bereits von vornherein in neutralisierter Form eingesetzt wurden.

Zur Herstellung der Polyurethan-Dispersionen werden die so erhaltenen Makromonomeren, die Vinylgruppen enthalten, durch Zugabe von Wasser in eine wäßrige Dispersion überführt und nach an sich bekannten Methoden durch radikalisch initiierte Polymerisation polymerisiert. Bei dieser Polymerisation können, falls nicht von vornherein als sogenannte Reaktivverdünner vorhanden, Monomere zugegeben werden, die dann in das Polyurethan mit einpolymerisiert werden.

Bei diesen Monomeren handelt es sich um alpha,beta-ungesättigte Monomere. Beispiele hierfür sind alpha,beta-ungesättigte Vinylmonomeren wie Alkyl-acrylate, -methacrylate und -crotonate mit 1 bis 20 Kohlenstoffatomen im Alkylrest, Di-, Tri-, und Tetracrylate, -methacrylate, -crotonate von Glykolen, tri- und tetrafunktionellen Alkoholen, substituierte und unsubstituierte Acryl- und Methacrylamide, Vinylether, alpha,beta-ungesättigte Aldehyde und Ketone, Vinylalkylketone mit 1 bis 20 Kohlenstoffatomen im Alkylrest, Vinylether, Vinylester, Diester von alpha,beta-ungesättigten Dicarbonsäuren, Styrol, Styrolderivate, wie z.B. alpha-Methylstyrol.

Das zur Herstellung wäßriger Uni-Basislacke notwendige Bindemittelmodul B) kann aus einem wäßrigen Bindemittel bestehen. Die wäßrigen Bindemittel können aber auch in Kombination vorliegen. Dabei werden die Bindemittel jeweils getrennt hergestellt und danach als Einzelmodul gelagert oder es wird eine Mischung der Bindemittel hergestellt und dann als Mehrkomponenten-Bindemittelmodul gelagert.

Bevorzugt enthält das Bindemittelmodul B) wäßrige Bindemittel auf Basis anionisch stabilisierter Polyurethane. Es kann zweckmäßig sein, wenn ein Teil, z.B. bis zu 50 Gew.-%, der PU-Bindemittel durch Harze auf Basis einer Kombination aus (Meth)acrylcopolymer und Polyesterharz ersetzt wird.

Weiterhin kann das Bindemittelmodul B) wasserverdünnbare Bindemittel auf Cellulosebasis enthalten.

Das wäßrige Bindemittelmodul B) kann weiterhin Aminoplastharze und/oder blockierte Polyisocyanate enthalten. Die Aminoplastharze und die blockierten Polyisocyanate können wasserverdünnbar oder nicht wasserverdünnbar sein und werden bei der Beschreibung des Vernetzermoduls erläutert. Sie liegen bevorzugt in einem Gewichtsverhältnis zum wasserverdünnbaren Bindemittel von 40 : 60 bis 5 : 95 vor, jeweils bezogen auf Festharz.

Zusätzlich können rheologiesteuernde Mittel enthalten sein. Weiterhin kann das wäßrige Bindemittelmodul geringe Anteile von üblichen Lösemitteln enthalten, bevorzugt weniger als 5 Gew.-%. Diese können beispielsweise die für das Farbmodul beschriebenen wassermischbaren Lösemittel sein. Der Festkörpergehalt des Bindemittelmoduls beträgt bevorzugt 20 bis 60 Gew.-%.

Das Bindemittelmodul B) kann Neutralisationsmittel für die anionischen Harze enthalten. Hierzu dienen Basen. Beispiele sind Ammoniak oder organische Amine wie Triethylamin, N-Methylmorpholin, Aminoalkohole wie Dimethylisopropanolamin, Dimethylethanolamin, 2-Amino-2-Methylpropanol-1.

Anionische Harze enthaltende wäßrige Bindemittelmodulbausteine besitzen bevorzugt pH-Werte von 7,0 - 8,5. Das Verhältnis von organischem Lösemittel zu Wasser innerhalb des wäßrigen Bindemittelmoduls beträgt bevorzugt bis zu 0,3 : 1, bevorzugt unter 0,2 : 1.

Das erfindungsgemäß verwendete Modulsystem kann ein Rheologiemodul C) enthalten. Dieses enthält Wasser und als Rheologiekomponente eine oder mehrere das Fließverhalten des fertigen wäßrigen Unibasislacks steuernde Substanzen.

Beispiele dafür sind Polymermikroteilchen, wie sie beispielsweise in der EP-A-0 38 127 beschrieben sind, anorganische Schichtsilikate, z.B. Aluminium-Magnesium-Silikat, Natrium-Magnesium-Schichtsilikate und Natrium-Magnesium-Fluorlithium-Schichtsilikate des Montmorillonittyps, Assoziativverdicker, z.B. auf Polyurethanbasis oder Cellulosebasis, Polyvinylalkohol, synthetische Polymere mit ionischen Gruppen wie z.B. Poly(meth)-acrylsäure. Diese Substanzen sind im Handel in vielfältiger Form erhältlich.

Das erfindungsgemäß verwendete Modulsystem kann auch ein Vernetzermodul D) enthalten. Das Vernetzermodul D) wird insbesondere dann eingesetzt, wenn der zu fertigende wäßrige unifarbene Lack unter Verwendung solcher Harze hergestellt wird, die vernetzbare Gruppen im Molekül enthalten.

Beispiele für im Vernetzermodul enthaltene Vernetzerharze sind Aminoplastharze und/oder blockierte Polyisocyanate. Es handelt sich um teilweise oder vollständig veretherte Amin-Formaldehyd-Kondensationsharze und/oder blockierte Polyisocyanate mit mindestens zwei reaktiven Stellen pro Molekül, wie sie auf dem Lacksektor üblich sind.

Solche Aminoplastharze sind beispielsweise beschrieben in Ullmann "Encyclopedia of Industrial Chemistry", 5. Auflage, Vol. A2, Kapitel "Aminoresins", Seiten 115 - 141 (1985) und Houben-Weyl, "Methoden der Organischen Chemie", Band 14/2, Seiten 319 - 388 (1962). Die Harze werden nach dem Stand der Technik hergestellt und von vielen Firmen als Verkaufsprodukte angeboten.

Beispiele für solche Aminoplastharze sind Amin-Formaldehyd-Kondensationsharze, die durch Reaktion von Aldehyden mit Melamin, Guanamin, Benzoguanamin oder Dicyandiamid entstehen. Die Alkoholgruppen der Aldehyd-Kondensationsprodukte werden dann teilweise oder vollständig mit Alkoholen verethert.

Beispiele für blockierte Isocyanate sind beliebige Di- und/oder Polyisocyanate, bei denen die Isocyanatgruppen mit einer Verbindung umgesetzt worden sind, die aktiven Wasserstoff enthält. Als Di- und/oder Polyisocyanate können auch entsprechende isocyanatgruppenhaltige Prepolymere verwendet werden. Die organischen Di- und/oder Polyisocyanate weisen bevorzugt eine mittlere Molmasse von 112 bis 2000, zweckmäßig eine mittlere Isocyanatfunktionalität von 2 bis 8 auf. Es handelt sich z.B. um aliphatische, cycloaliphatische, aromatische, gegebenenfalls auch sterisch gehinderte Polyisocyanate. Als Polyisocyanate sind besonders gut die sogenannten "Lackpolyisocyanate" geeignet, die aus bekannten Diisocyanaten hergestellt werden.

Typische Beispiele für derartige Diisocyanate sind Propylendiisocyanat, Tetramethylxylylendiisocyanat, Trimethylendiisocyanat, Hexamethylendiisocyanat, Trimethylhexandiisocyanat, Cyclohexan-1,3- und 1,4-diisocyanat, Methylcyclohexandiisocyanat, 4,4'-Diphenylmethandiisocyanat, Isophorondiisocyanat oder Dicyclohexylmethandiisocyanat.

Gut einsetzbare Isocyanate sind auch Urethangruppen aufweisende Polyisocyanate, die beispielsweise durch Umsetzung von überschüssigen Mengen an Diisocyanat mit einfachen mehrwertigen Alkoholen der Molmasse 62 bis 300, insbesondere Trimethylolpropan, erhalten werden können.

Zum Blockieren der NCO-Gruppen der Polyisocyanate können bekannte niedermolekulare Verbindungen verwendet werden. Beispiele dafür sind aliphatische oder cycloaliphatische Alkohole, Dialkylaminoalkohole, Oxime, Lactame, Imide, Hydroxyalkylester, Malonsäure- oder Acetessigsäureester.

Das Vernetzermodul kann den Vernetzer allein enthalten; jedoch können auch ein oder mehrere organische Lösemittel, Wasser, ein oder mehrere anionisch und/oder nicht-ionisch stabilisierte, wasserverdünnbare Bindemittel und/oder ein oder mehrere lackübliche Additive enthalten sein. Es handelt sich beispielsweise um die gleichen, wie sie für die anderen Module beschrieben sind.

Die verschiedenen Module sind lagerstabil. Sie können in dem erfindungsgemäßen Verfahren verwendet werden. Weiterhin ist es möglich, mehrere gleiche oder unterschiedliche Module zu neuen lagerstabilen Kombinationsmodulen zu mischen. Beispielsweise können verschiedene Farbmodule gemischt werden. Ebenso können beispielsweise Vernetzermodul und Bindemittelmodul gemischt werden. Ebenso kann beispielsweise das Rheologiemodul mit dem Farbmodul gemischt werden. Es hat sich als zweckmäßig gezeigt, ein Modulsystem zum Abmischen von Überzugsmitteln zu wählen, bei dem Farbmodul und Bindemittelmodul getrennt gehalten werden. Rheologie- und/oder Vernetzermodul können getrennt oder auch vermischt mit den anderen Modulbausteinen vorliegen.

Die Herstellung der wäßrigen einkomponentigen Unibasislacke erfolgt durch einfaches Vermischen der Farbmodule mit den Bindemittelmodulen und gegebenenfalls Rheologiemodulen und/oder Vernetzermodulen. Dabei ist die Reihenfolge der Zugabe beliebig, bevorzugt werden jedoch die Module mit den höchsten Viskositäten und dem größten Volumenanteil vorgelegt. Nach dem Vermischen kann durch Zugabe von Wasser, insbesondere deionisiertem Wasser, auf Applikationsviskosität eingestellt werden.

Der fertige durch das erfindungsgemäße Verfahren hergestellte unifarbene Lack, insbesondere Uni-Basislack, hat beispielsweise Festkörpergehalte von 10 - 50 Gew.-%, bevorzugt von 15 - 40 Gew.-%, bevorzugt bei einem Pigment-/Bindemittelverhältnis von 0,06 : 1 bis 2,5 : 1. Die Harzzusammensetzung innerhalb des Lackfestkörpers ist dabei in jedem einzelnen unifarbenen Lack bevorzugt konstant, wobei im Falle solcher unifarbener Lacke, die Vernetzerharze enthalten, innerhalb der Festharzzusammensetzung bevorzugt ein Verhältnis von filmbildenden Bindemitteln zu Vernetzerharzen von 95 : 5 bis 60 : 40, bezogen auf das Gewicht, gegeben ist.

Der Lösemittelanteil beträgt unter 20 Gew.-%, bevorzugt unter 15 Gew.-%, besonders bevorzugt unter 10 Gew.-%. Der pH-Wert der wäßrigen Basislacke ergibt sich aus den Modulbausteinen durch Mischung. Dabei ist eine Korrektur des pH-Werts im allgemeinen nicht notwendig.

Die fertigen wäßrigen unifarbenen Lacke können direkt nach dem Vermischen appliziert werden, sie können jedoch auch länger als 12 Monate gelagert werden.

Die erfindungsgemäß hergestellten wäßrigen unifarbenen Lacke können nach üblichen Methoden appliziert werden. Bevorzugt werden sie durch Spritzen in einer Trockenschichtdicke von 8 - 45 µm, bevorzugt 10 bis 30 µm, appliziert. Sie werden bevorzugt als Unibasislacke in Mehrschichtlackierungen eingesetzt. Sie können jedoch auch als unifarbene Decklacke ohne weitere Überlackierung verwendet werden. Beim Einsatz als Unibasislack wird nach der Spritzapplikation bevorzugt im Naß-in-Naß-Verfahren weiter verarbeitet, das heißt nach einer Ablüftphase bei 20 - 80°C wird die aus dem Unibasislack erstellte Schicht mit einem üblichen Klarlack in einer Trockenschichtdicke von bevorzugt 30 - 60 µm überlackiert und gemeinsam mit diesem bei Temperaturen zwischen 20 und 140°C getrocknet oder vernetzt.

Die so erhaltenen Mehrschichtunilackierungen entsprechen den heute üblichen Anforderungen in der Kraftfahrzeuglackierung. Die erfindungsgemäß hergestellten wäßrigen unifarbenen Lacke sind somit geeignet für die Fahrzeugerstlackierung und -reparaturlackierung, sie können jedoch auch in anderen Bereichen, wie z.B. der Kunststofflackierung, insbesondere Fahrzeugteilelackierung, eingesetzt werden.

Das beim erfindungsgemäßen Verfahren eingesetzte Modulsystem besteht aus einzelnen lagerstabilen Modulen (Bausteine). Die Module können filmbildende Bindemittel enthalten, die in Lösemittelforrn oder in wäßriger Phase herstellbar sind. Mit dem Modulsystem lassen sich lösemittelarme, wäßrige Unibasislacke, die eine gute Langzeitlagerstabilität besitzen, herstellen. Insbesondere wird eine rationalisierte Lagerung und Fertigung der wäßrigen Unibasislacke erreicht. Es ist auch möglich, ein Mischen der Module unmittelbar vor der Applikation vorzunehmen.

Überraschenderweise hat es sich gezeigt, daß beim erfindungsgemäßen Verfahren durch Einsatz der definierten Farbmodule mit hohem Wassergehalt eine Vermischung mit Bindemittelmodulen möglich ist, wobei letztere hinsichtlich der Wahl der darin enthaltenen Bindemittel unabhängig sind, sofern diese anionisch und/oder nicht-ionisch stabilisiert sind. Es werden so stabile, hinsichtlich ihrer Bindemittelauswahl variable Überzugsmittel mit abstimmbarem Farbton bereitgestellt.

Die folgenden Beispiele erläutern die Erfindung. Alle Teile (T) beziehen sich auf das Gewicht.

### Beispiel 1

### Herstellung einer Polyurethan-Dispersion gemäß der DE-A-42 24 617, Herstellungsbeispiel 3:

In einem Reaktionsgefäß mit Rührer, Innenthermometer, Heizung und Rückflußkühler werden 1005 g eines linearen Polyesters (aufgebaut aus Adipinsäure, Isophthalsäure und Hexandiol mit einer OH-Zahl von 102) auf 90°C erwärmt und bei dieser Temperatur 1,8 g Trimethylolpropan sowie 393 g Isophorondiisocyanat zugesetzt. Diese Temperatur wird gehalten bis die NCO-Zahl 3,8 beträgt. Nach Abkühlen auf 60°C werden eine Lösung aus 35,3 g Dimethylolpropionsäure, 26,1 g Triethylamin und 250 g N-Methylpyrrolidon zugegeben. Nach Erwärmen auf 80°C wird gehalten, bis eine NCO-Zahl von 1,5 erreicht ist. Es wird mit der molaren Menge entionisiertem Wasser gemischt und die Lösung wird bei 80°C gehalten, bis kein Isocyanat mehr nachweisbar ist. Anschließend wird mit soviel Wasser verdünnt, bis eine flüssige Dispersion mit 34 Gew.-% Festkörper entsteht.

### Beispiel 2

### Herstellung eines Bindemittelmoduls B1)

Nachfolgend genannte Bestandteile werden unter Rühren gut miteinander vermischt:
42,0 Teile einer üblichen Polyurethandispersion (gemäß DE-A-4122265, Beispiel 1) mit 35 % Festkörper,
47,0 Teile vollentsalztes Wasser
2,3 Teile n-Butanol,
6,0 Teile Butylglykol,
1,4 Teile eines handelsüblichen Verdickers auf Polyacrylsäurebasis,
1,3 Teile N,N-Dimethylethanolamin.

### Beispiel 3

### Herstellung eines Bindemittelmoduls B2)

Nachfolgend genannte Bestandteile werden unter Rühren gut miteinander vermischt:
44,0 Teile der Polyurethandispersion aus Beispiel 1,
30,0 Teile vollentsalztes Wasser,
6,5 Teile Butyldigylkol,
8,0 Teile Butylglykol,
3,0 Teile eines handelsüblichen Entschäumers,
7,0 Teile handelsübliches Melaminharz (Cymel 325),
1,1 Teile des Verdickers aus Beispiel 2,
0,4 Teile N,N-Dimethylethanolamin.

### Beispiel 4

### Herstellung eines blauen Farbmoduls A1)

Das Farbmodul enthält folgende Bestandteile:
42,0 Teile eines üblichen Polyurethanpastenharzes (gemäß DE-A-4000889) mit 30 % Festkörper,
34,0 Teile eines handelsüblichen blauen Kupferphthalocyanin-Pigmentes,
5,0 Teile eines Dispergierhilfsmittels (Disperse Ayd W22),
18,85 Teile vollentsalztes Wasser,
0,15 Teile N,N-Dimethylethanolamin.

Zunächst wird das Pigment in einem Gemisch aus Additiven und etwa der Hälfte des Pastenharzes angerieben. Danach werden das restliche Pastenharz, Amin und Wasser zugegeben und gut vermischt.

### Beispiel 5

### Herstellung eines grünen Farbmoduls A2)

Analog zu Beispiel 4 wurden 45 Teile des Pastenharzes aus Beispiel 4, 30 Teile eines handelsüblichen grünen Phthalocyaninpigmentes, 5 Teile des Dispergierhilfsmittels aus Beispiel 4, 2 Teile Butylglykol, 17,9 Teile deionisiertes Wasser und 0,1 Teile N,N-Dimethylethanolamin verarbeitet.

### Beispiel 6

### Herstellung eines weißen Farbmoduls A3)

Analog zu Beispiel 4 wurden 20 Teile des Pastenharzes aus Beispiel 4, 59 Teile eines handelsüblichen Titandioxidpigmentes vom Rutiltyp, 0,4 Teile eines Dispergierhilfsmittels (Sojalecithin), 5 Teile Butylglykol, 15,4 Teile deionisiertes Wasser und 0,2 Teile N,N-Dimethylethanolamin verarbeitet.

### Beispiel 7

### Herstellung von Uni-Wasserbasislacken

Durch gleichmäßiges Vermischen der in der Tabelle angegebenen Module wurden Uni-Wasserbasislacke hergestellt, die sich als lagerstabil erwiesen.

| UNIWASSERBASISLACKE | | | | |
|---|---|---|---|---|
| | A (Grün) | B (Blau) | C (Weiß) | D (Grün) |
| Bindemittel-Modul B1 | 84 T | 58 T | | |
| Bindemittel-Modul B2 | | | 56 T | 78 T |
| Farbmodul A1 | 5 T | 12 T | | |
| Farbmodul A2 | 9 T | | | 20 T |
| Farbmodul A3 | 2 T | 30 T | 44 T | 2 T |

## Patentansprüche

1. Verfahren zur Herstellung von wäßrigen, unifarbenen Überzugsmitteln mit abstimmbarem Farbton, durch Vermischen von mindestens einer wäßrigen, Farbpigmente und/oder Füllstoffe und Pastenharze auf Polyurethanbasis enthaltenden Komponente A), mit mindestens einer wäßrigen Bindemittelkomponente B), dadurch gekennzeichnet, daß man getrennt voneinander jeweils einen Vorrat an
- mindestens einem stabilen Farbmodul A), enthaltend
ein oder mehrere Farbpigmente und/oder Füllstoffe, ein oder mehrere anionisch stabilisierte wasserverdünnbare Pastenharze auf Polyurethanbasis, mindestens 20 Gew.-% Wasser, sowie gegebenenfalls ein oder mehrere wasserverdünnbare anionisch und/oder nicht-ionisch stabilisierte Bindemittel, ein oder mehrere organische Lösemittel und/oder lackübliche Additive, und
- mindestens einem stabilen Bindemittelmodul B), enthaltend
ein oder mehrere wasserverdünnbare anionisch und/oder nicht-ionisch stabilisierte Bindemittel, Wasser, gegebenenfalls ein oder mehrere organische Lösemittel, sowie gegebenenfalls einen oder mehrere Vernetzer und/oder ein oder mehrere lackübliche Additive,
- sowie gegebenenfalls zusätzlich:
* mindestens einem stabilen Rheologiemodul C), enthaltend
ein oder mehrere organische oder anorganische die Rheologie steuernde Mittel (Rheologiekomponenten) und Wasser, sowie gegebenenfalls ein oder mehrere wasserverdünnbare anionisch und/oder nicht-ionisch stabilisierte Bindemittel und/oder ein oder mehrere organische Lösemittel,
und/oder
* mindestens einem stabilen Vernetzermodul D), enthaltend
ein oder mehrere Vernetzungsmittel, sowie gegebenenfalls ein oder mehrere organische Lösemittel, Wasser, ein oder mehrere anionisch und/oder nicht-ionisch stabilisierte wasserverdünnbare Bindemittel und/oder ein oder mehrere lackübliche Additive,
bereitstellt und gegebenenfalls einlagert, und bei Bedarf die jeweils zur Erzielung eines gewünschten Farbtons erforderlichen Mengen der bereitgestellten Module A) und B), sowie gegebenenfalls C) und/oder D) miteinander vermischt.

2. Verfahren nach Anspruch 1, worin das Pigment- und/oder Füllstoff/Bindemittel-Verhältnis in dem Farbmodul A) 0,01 : 1 bis 10 : 1, bezogen auf das Festkörpergewicht, beträgt.

3. Verfahren nach einem der Ansprüche 1 oder 2, worin der Wassergehalt im Farbmodul A) 20 bis 75 Gew.-% beträgt.

4. Verfahren nach einem der vorhergehenden Ansprüche, worin das Pastenharz auf Polyurethanbasis des Farbmoduls A) ein Polyesterurethanharz mit einer Säurezahl von 10 bis 50 ist, das erhältlich ist durch Umsetzung von
- einem oder mehreren, von olefinischen Doppelbindungen freien Polyesterpolyolen mit einer OH-Zahl von 35 bis 200 und einer Molmasse von 500 bis 5000, die mit 2 bis 30 Gew.-%, bezogen auf das Polyesterpolyol, an einem oder mehreren niedermolekularen Diolen mit einer Molmasse von 60 bis 350, von denen ein Teil mindestens eine zur Anionenbildung befähigte Säuregruppe enthält, vermischt sind, mit
- einem oder mehreren Diisocyanaten, im Verhältnis der OH-Gruppen von Polyesterpolyol und Diol zu den NCO-Gruppen des Diisocyanats von über 1,0 bis 1,2, wobei die Molmasse des Diisocyanats so gewählt wird, daß das erhaltene Polyesterurethan ein Zahlenmittel der Molmasse (Mn) von 3000 bis 200000 aufweist.

5. Verfahren nach einem der vorhergehenden Ansprüche, worin das Bindemittelmodul B) als Bindemittel ein oder mehrere anionisch stabilisierte (Meth)acrylcopolymere, Polyesterharze und/oder Polyurethanharze enthält.

6. Verfahren nach Anspruch 5, worin das Bindemittelmodul B) als Bindemittel ein oder mehrere Polyurethanharze mit einem Gewichtsmittel der Molmasse (Mw) von 1000 bis 500000 in Form einer wäßrigen Dispersion mit einem Festkörpergehalt von 20 bis 50 Gew.-% enthält.

7. Verfahren nach einem der vorhergehenden Ansprüche, dadurch gekennzeichnet, daß man die Module in derartigen Mengenverhältnissen vermischt, daß das entstehende Überzugsmittel weniger als 20 Gew.-% organische Lösemittel enthält.

8. Verwendung des Verfahrens nach einem der Ansprüche 1 bis 7 bei der Beschichtung von Kraftfahrzeugen und Kraftfahrzeugteilen in der Serien- und Reparaturlackierung.

9. Verwendung des Verfahrens nach einem der Ansprüche 1 bis 7 bei der Lackierung von Kunststoffen.
